(19) **Europäisches Patentamt**

**European Patent Office**

**Office européen des brevets**

(11) Publication number: **0 533 717 B1**

# EUROPEAN PATENT SPECIFICATION

(45) Date of publication of patent specification: **29.03.95**

(21) Application number: **91910469.5**

(22) Date of filing: **02.05.91**

(86) International application number:
**PCT/US91/03022**

(87) International publication number:
**WO 91/18946 (12.12.91 91/28)**

The file contains technical information submitted after the application was filed and not included in this specification

(51) Int. Cl.⁶: **C08K 5/09**, C08L 13/00, C08L 29/04, C09K 3/10, H01B 3/44

(54) **WATER REACTIVE SEALANT COMPOSITION.**

(30) Priority: **08.06.90 US 534973**

(43) Date of publication of application:
**31.03.93 Bulletin 93/13**

(45) Publication of the grant of the patent:
**29.03.95 Bulletin 95/13**

(84) Designated Contracting States:
**DK ES GB SE**

(56) References cited:
**US-A- 4 639 483**

(73) Proprietor: **MINNESOTA MINING AND MANU-FACTURING COMPANY**
**3M Center,**
**P.O. Box 33427**
**St. Paul,**
**Minnesota 55133-3427 (US)**

(72) Inventor: **HAUGEN, Hartwick, A.**
**Minnesota Mining & Manufacturing Co.**
**P.O.B. 33427,**
**St. Paul, MN 55133-3427 (US)**
Inventor: **HIBBARD, William, A.**
**Minnesota Mining & Manufacturing Co.**
**P.O.B. 33427,**
**St. Paul, MN 55133-3427 (US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

Technical Field

The invention relates to a composition which can be effectively used as an encapsulant/sealant, has electrically insulating properties, and is reactive upon contact with moisture to prevent further ingress of water therein. More specifically, the composition comprises a polyfunctional carboxylic acid/anhydride, an inorganic basic oxide, a hydrophilic additive, and a thickening agent.

Background Art

Modern sealants are comprised of one-part and two-part compositions which, in the uncured state, are either pourable or putty-like. When cured, such materials are transformed into three-dimensional structures which in theory form a barrier against moisture, gases and various contaminates. Two classes of sealants are activated by moisture: moisture-cured sealants and moisture-activated catalyst cured sealants. The majority of moisture-cured sealants are one-part urethanes and one-part silicones. Urethane sealants contain unreacted isocyanate groups which react with moisture to form a continuous three-dimensional network through urea linkages (see, e.g., US-A-4,539,345). One-part silicones contain hydrolyzable groups which react with moisture to yield silanol groups, form Si-O-Si bonds and crosslink (see, e. g., US-A-4,652,624). Polysulfides and polymercaptans are examples of moisture-activated catalyst cured sealants (such as those disclosed in US-A-3,872,059 and 4,830,688). Atmospheric moisture ionizes the heavy metal catalyst which then catalyzes the curing reaction.

US-A-4,116,886 represents an example of moisture-curable epoxies, which are not as common in sealant usage as those above. All of these systems have inherent problems to their use. It is well known that isocyanate compounds can induce allergic reactions in certain persons. Silicones are the highest in price among marketed sealants; thio-functional sealants have an obnoxious odor.

Hydrocarbon greases have existed for a long time and are still used as insulating materials. GB-A-526,510; 530,374; 1,039,166; and 1,592,165 and US-A-3,314,886 all describe the use of insulating oils containing additives therein, typically based on the reaction of a carboxylic acid and an inorganic base dispersed in the insulating oil, primarily a hydrocarbon oil. The ability to insulate is attributed to the hydrocarbon oil. The additives typically include a higher fatty acid and a base, capable of reacting with the acid, which forms a water-insoluble, oleophilic, metal soap. The compositions may contain polycarboxylic acid as gelling agents, polymers, antioxidants and dispersants. All examples contain a liquid vehicle, such as a hydrocarbon oil, which is taught to provide the insulative characteristics to the composition. The acid/base reaction occurs upon mixing, in most cases at elevated temperatures.

The practice of using an insulating oil is also seen in the manufacture of reenterable encapsulants. Various polyurethane based gels are disclosed in US-A-4,102,716; 4,533,598; 4,375,521; 4,355,130; 4,281,210; 4,596,743; 4,168,258; 4,329,442; 4,231,986; 4,171,998; 4,029,626 and 4,008,197.

The third class is the water-reactive grease composition, such as that disclosed in US-A-4,639,483. This composition consists of an insulating oil, a carboxylic acid having 18 to 200 carbons, a basic oxide selected from calcium oxide or zinc oxide, optionally an elastomer, soluble in the composition, and optionally a hydrophilic additive. This composition remains in a soft, reenterable state. The mixture of insulating oil, carboxylic acid and basic oxide has the consistency of grease. Upon the ingress of water, the composition cures to the consistency of hard rubber or plaster of paris which stops water from further penetration. This reference teaches the surprising feature that certain carboxylic acids may be combined with certain inorganic basic oxides (i.e., CaO and ZnO) in oils to form a paste in which no reaction between the acid and base will take place, and which is stable at ambient conditions. However, upon the addition of water the acid and base react to form a hard solid.

In contrast with the foregoing, there is provided by the present invention a moisture-reactive composition free of hydrocarbon insulating oil and consisting essentially of at least one liquid polycarboxylic acid or anhydride; at least one inorganic basic oxide selected from zinc oxide, calcium oxide, barium oxide, strontium oxide, copper(I) oxide, and magnesium oxide; at least one hydrophilic material selected from a hydrophilic clay, polyvinyl pyrrolidone, polyvinyl alcohol, the potassium salt of polyacrylic acid, and the sodium salts of high molecular weight organic acids; at least one suspending agent, selected from amorphous fumed silica, aluminium octoate, e.g. Alumagel™ (Witco Chemical Corporation), diatomateous earth, metal soaps, the magnesium salts of stearic acid, the aluminium salts of stearic acid, powdered polyvinyl chloride, and glass walled hollow microspheres; and optional conventional additives. Surprisingly, a moisture-curably insulative composition is provided which is capable of consuming water, reacting and forming a barrier from further penetration of water or water vapor. Also, surprisingly, the very additives taught to act as modifiers to an insulating oil have themselves been found to provide an excellent insulating material, superior in its ability to prevent the ingress of water.

## Detailed Description of Illustrative Embodiments

As discussed above, the present invention consists of a mixture of a liquid polyfunctional carboxylic acid or anhydride together with a specified inorganic basic oxide. These two components are inert toward each other and when mixed with a specified hydrophilic additive and a specified thickening agent, a composition having the consistency of grease is formed.

When water comes in contact with the basic oxide component, hydrolysis occurs and the corresponding hydroxide is formed. The hydroxide then enters into a second reaction with the organic acid to produce a barrier layer of various thickness depending on the specific components. Surprisingly, the remaining material remains reenterable and has excellent insulating properties. Prior art sealants are either soft, allowing water to penetrate, are hard and not reenterable, or turn hard on water contact and become difficult to reenter.

The acidic component has been determined to be a liquid polyfunctional carboxylic acid or anhydride. Any acidic material can be utilized as long as it does not react with the basic oxide component. In fact, numerous saturated, unsaturated or aromatic di-, tri-, and polycarboxylic acids or anhydrides are available for use. Commercial examples of suitable acidic materials include the Empol™ series from the Quantum Chemical Company; the Hystrene™ series available from Witco Chemical; the Ricon™ series available from the Colorado Chemical Specialties, Inc.; the Versadyme™ series available from Henkel/Emery Industries; the Unidyme™ series available from Union Camp; the LIR™ and NISSO™ series available from Kennedy and Klim, Inc.; and the Hycar™ series available from B. F. Goodrich.

The amount of acid may vary from 35 to 70 parts by weight of the total composition, with from 45 to 60 parts by weight being preferred.

Mono-acids within dimer acids have been found to reduce the stability of the composition during heat aging; i.e., the composition may become a solid at elevated temperatures without the presence of water. It has been discovered that increasing the basic oxide content allows for an increase in stability such that compositions containing high mono-acid contents such as Empol™ 1003 which has a mono-acid content of about 20 weight percent, do not react in the absence of water. Preferred acidic materials are dimer acids having mono-acid contents of less than 2 weight percent.

As mentioned above useful basic oxides are those of copper (I), barium, calcium, magnesium, zinc and strontium. As discussed above, the oxide must be stable with the acid material and be hydrolyzable to form a hydroxide reactive with the acid. The preferred basic oxide is calcium oxide. The basic oxide may vary from 15 to 50 parts by weight, and preferably 25 to 35 parts by weight.

As mentioned above the hydrophilic additive is selected from a hydrophilic clay, such as BEN-A-GEL™ available from NL Industries, polyvinyl pyrrolidone, polyvinyl alcohol, and the sodium salts of various high molecular weight organic acids. There are various grades of hydrophilicity of such additives, i.e., they may not function at the same rate of efficiency but are still useful herein. Commercial examples of these hydrophilic additives include: Aridall™ 1125, the potassium salt of polyacrylic acid, from Chemdal Corp.; Elvanol™ 71-30, a 99% to 99.8% hydrolysed polyvinyl alcohol from DuPont; Vinol™ 540S, an 87% to 90% hydrolysed polyvinyl alcohol from Air Products Company; and the sodium salts of various high molecular weight organic acids available as Waterlock™ from the Grain Processing Corp. Preferably, the hydrophilic additive is dry or has been dried, e.g., oven dried, before use in compositions of the invention as adsorbed water therein may tend to reduce the shelf life or stability of the resultant composition.

The Elvanol™ 71-30 has been found to produce a hard cured composition at the water interface, while the Vinol™ material, being less hydrolyzed, yields a softer cured composition at the water interface.

The hydrophilic additive may vary from 1 to 25 parts by weight based on the total composition, with the preferred concentration being from 8 to 20 parts by weight. A preferred hydrophilic additive is polyvinyl alcohol.

The suspending agent must be capable of suspending the inorganic oxide. The agent may vary from 0.1 to 10 parts by weight, with the preferred being from 1 to 4 parts by weight, again based on the total composition. Sufficient suspending agents are selected from amorphous fumed silica, aluminum octoate, Alumagel™ diatomateous earth, metal soaps, the magnesium salts of stearic acid, the aluminium salts of stearic acid, powdered polyvinyl chloride, and glass-walled hollow microspheres.

Examples of sufficient suspending agents are Cab-O-Sil™ M-5, an amorphous fumed silica from the Cabot Corp, (our preferred agent); aluminum octoate; Alumagel™ from the Witco Chemical Corp; Infusorial Earth™, a diatomateous earth available from Fisher Scientific Company; metal soaps such as the calcium salt of lauric acid commercially available from Pfaltz & Bauer, Inc.; magnesium or aluminum salts of stearic acid available from Fisher Scientific Co.; powdered polyvinyl chloride commercially available from B. F. Goodrich Co.; and glass-walled hollow microspheres available from Minnesota Mining & Manufacturing Co. (3M).

Other conventional additives such as fillers, antioxidants and fungicides may be added as desired.

The compositions of the present invention find utility in all applications where it is desired to seal or block water within electronic components, copper or fiber optic cable, and power cable. They are particularly useful as reenterable sealants for the protection of telephone cable or power cable splices where good insulating properties are needed along with a means to inhibit the ingress of water. Other useful applications include: telephone pedestal sealant, buried service wire closure sealant, cable filler, water blocks, manhole restoration sealant, duct sealant, connector filler, module splice protection, closure system component (as either a hermetic cable seal or air block between closure walls), mastic, and firebarrier material.

The present invention is also directed to a splice assembly, comprising the moisture reactive material (sometimes referred to as the sealant), at least two conductors spliced together, and optionally, a closure (sometimes also referred to as a splice closure or connector). Prior to exposure to moisture, the inventive composition is sufficiently soft to flow around and into the interstices of the splice assembly and establish intimate contact with the splice. The moisture-activatable material remains soft until such time as it is contacted by moisture, such as through contact with liquid water or water vapor. While the sealant remains soft, the splice closure is readily reenterable. Upon contact with moisture, the sealant begins to react. When in contact with surface water, the reaction is limited to a "skinning" on the surface, while remaining unreacted beneath the skin. When water is mixed in with the sealant, the sealant consumes the moisture. Consequently, the sealant can actually improve (and even restore) service which has been impaired (or interrupted) through entry of water into the splice area.

The invention is more specifically delineated by the following non-limiting examples. In all instances, the compositions were prepared by mixing the indicated components under ambient conditions using a Hobart N-50 dough mixer, commercially available from Hobart Manufacturing. Unless otherwise indicated, all amounts are expressed in parts by weight. The samples were then examined to determine the insulating properties thereof by insertion of a probe having two conductors spaced about 0.5 inch apart (1.25 cm) into the material being tested, with the assembly, i.e., the probe and material, being immersed under 30.5 cm of water and aged at 60°C. A second test, one to determine the effect of temperature cycling on the composition, was configured in the same manner as the water test above, with the difference being that a temperature cycle from -40°C to 60°C, at three cycles per day, was used. The samples were considered to have failed if the insulation resistance thereof fell to below 100 mega ohms (1.0 $E^8$ ohms). Penetrometer readings were undertaken according to ASTM D-217, using a full cone.

Examples

| Example | 1 | 2 | 3 | 4 | 5 | 6 |
|---|---|---|---|---|---|---|
| Formulation | | | | | | |
| Versadyme™ 288 | 55.82 | 64.75 | 49.55 | 58.81 | 49.55 | 58.81 |
| Calcium Oxide | 27.09 | 21.62 | 35.28 | 28.81 | 24.04 | 19.63 |
| Elvanol™ 71-30 | 15.82 | 12.63 | 14.04 | 11.47 | 25.28 | 20.64 |
| Cab-O-Sil™ M-5 | 1.27 | 1.01 | 1.12 | 0.92 | 1.12 | 0.92 |
| Material Characterization | | | | | | |
| Specific Gravity (gm/cc) | 1.155 | 1.171 | 1.197 | 1.224 | 1.204 | 1.178 |
| Full Cone Penetration (1/10 mm) | 398 | 423 | 392 | 419 | 350 | 431 |
| Aging in Water @ 60°C (Days to Failure) | 57+ | 57+ | 57+ | 57+ | 57+ | 57+ |
| Temperature Cycling (Cycles to Failure) | 102+ | 102+ | 102+ | 102+ | 102+ | 102+ |

+ Denotes the test was terminated without failure.

| Example | 7 | 8 | 9 | 10 | 11 | 12 |
|---|---|---|---|---|---|---|
| Formulation | | | | | | |
| Versadyme™ 288 | 44.55 | 53.87 | 54.44 | 63.47 | 48.86 | 57.75 |
| Calcium Oxide | 31.72 | 26.39 | 26.42 | 21.19 | 34.51 | 28.29 |
| Elvanol™ 71-30 | 22.73 | 18.91 | 15.43 | 12.38 | 13.74 | 11.26 |
| Cab-O-Sil™ M-5 | 1.01 | 0.84 | 3.70 | 2.97 | 3.30 | 2.70 |
| Material Characterization | | | | | | |
| Specific Gravity (gm/cc) | 1.287 | 1.190 | 1.221 | 1.216 | 1.220 | 1.278 |
| Full Cone Penetration (1/10 mm) | 395 | 377 | 302 | 283 | 285 | 367 |
| Aging in Water @ 60°C (Days to Failure) | 57 + | 57 + | 57 + | 57 + | 57 + | 57 + |
| Temperature Cycling (Cycles to Failure) | 102 + | 102 + | 102 + | 90 | 102 + | 102 + |
| + Denotes the test was terminated without failure. | | | | | | |

| Example | 13 | 14 | 15 | 16 | 17 | 18 |
|---|---|---|---|---|---|---|
| Formulation | | | | | | |
| Versadyme™ 288 | 48.46 | 57.75 | 43.66 | 52.98 | 46.54 | 59.79 |
| Calcium Oxide | 23.52 | 19.28 | 31.09 | 25.95 | 30.75 | 23.13 |
| Elvanol™ 71-30 | 24.73 | 20.27 | 22.28 | 18.59 | 20.38 | 15.33 |
| Cab-O-Sil™ M-5 | 3.30 | 2.70 | 2.97 | 2.48 | 2.33 | 1.75 |
| Material Characterization | | | | | | |
| Specific Gravity (gm/cc) | 1.281 | 1.264 | 1.218 | 1.213 | 1.230 | 1.155 |
| Full Cone Penetration (1/10 mm) | 231 | 331 | 227 | 349 | 355 | 381 |
| Aging in Water @ 60°C (Days to Failure) | 57 + | 57 + | 57 + | 57 + | 57 + | 57 + |
| Temperature Cycling (Cycles to Failure) | 102 + | 12 + + | 102 + | 102 + | 102 + | 102 + |
| + Denotes the test was terminated without failure. | | | | | | |
| + + Denotes the test was terminated because of testing assembly failure. | | | | | | |

| Example | 19 | 20 | 21 | 22 | 23 | 24 |
|---|---|---|---|---|---|---|
| Formulation | | | | | | |
| Versadyme™ 288 | 58.22 | 50.53 | 58.22 | 50.53 | 54.87 | 53.35 |
| Calcium Oxide | 20.80 | 31.26 | 28.41 | 24.66 | 26.78 | 26.03 |
| Elvanol™ 71-30 | 18.83 | 16.34 | 11.22 | 22.95 | 17.75 | 17.26 |
| Cab-O-Sil™ M-5 | 2.15 | 1.87 | 2.15 | 1.87 | 0.60 | 3.36 |
| Material Characterization | | | | | | |
| Specific Gravity (gm/cc) | 1.146 | 1.215 | 1.274 | 1.175 | 1.199 | 1.193 |
| Full Cone Penetration (1/10 mm) | 364 | 329 | 370 | 318 | 427 | 299 |
| Aging in Water @ 60°C (Days to Failure) | 57 + | 57 + | 57 + | 57 + | 57 + | 57 + |
| Temperature Cycling (Cycles to Failure) | 18 + + | 102 + | 102 + | 102 + | 102 + | 102 + |
| + Denotes the test was terminated without failure. | | | | | | |
| + + Denotes the test was terminated because of testing assembly failure. | | | | | | |

| Example | 25 |
|---|---|
| Formulation | |
| Versadyme™ 288<br>Calcium Oxide<br>Elvanol™ 71-30<br>Cab-O-Sil™ M-5 | 54.10<br>26.40<br>17.50<br>2.00 |
| Material Characterization | |
| Specific Gravity (gm/cc)<br>Full Cone Penetration (1/10 mm)<br>Aging in Water @ 60°C (Days to Failure)<br>Temperature Cycling (Cycles to Failure) | 1.184<br>318<br>57+<br>102+ |
| + Denotes the test was terminated without failure. | |

| Example | 26 | 27 | 28 | 29 | 30 | 31 |
|---|---|---|---|---|---|---|
| **Acidic Materials** | | | | | | |
| Hystrene™ 5460 | 54.1 | | | | | |
| Empol™ 003 | | 54.1 | | | | |
| Empol™ 1040 | | | 54.1 | | | |
| Empol™ 1041 | | | | 54.1 | | |
| Empol™ 1052 | | | | | 54.1 | |
| Versadyme™ 204 | | | | | | 54.1 |
| Hycar™<br>  2000X-162 CTB | | | | | | |
| Ricon™ 156 C | | | | | | |
| Ricon™ 157 C | | | | | | |
| LIR™ 403 | | | | | | |
| LIR™ 410 | | | | | | |
| Nisso™ PB C-1000 | | | | | | |
| Ricon™ 131/MA | | | | | | |
| Ricon™ 130/13MA | | | | | | |
| Ricon™ 181/10MA | | | | | | |
| **Basic Oxide** | | | | | | |
| Calcium Oxide | 26.4 | 26.4 | 26.4 | 26.4 | 26.4 | 26.4 |
| **Suspending Agents** | | | | | | |
| Cab-O-Sil™ M-5 | 2.0 | 2.0 | 2.0 | 2.0 | 2.0 | 2.0 |
| **Hydrophilic Additive** | | | | | | |
| Elvanol™ 71-30 | 17.5 | 17.5 | 17.5 | 17.5 | 17.5 | 17.5 |

| Example | 26 | 27 | 28 | 29 | 30 | 31 |
|---|---|---|---|---|---|---|
| **Material Characterization** | | | | | | |
| Specific Gravity (gm/cc) | 1.204 | 1.174 | 1.204 | 1.162 | 1.273 | 1.207 |
| Full Cone Penetration (1/10 mm) | 267 | 252 | 322 | 358 | 381 | 315 |
| Aging in Water @ 60°C (Days to Failure) | 2 | 31+ | 31+ | 31+ | 31+ | 2 |
| Temperature Cycling (Cycles to Failure) | 0 | 81+ | 81+ | 81+ | 81+ | 0 |

+ denotes the test was terminated without failure.
NT denotes the material was not tested.

| Example | 32 | 33 | 34 | 35 | 36 | 37 |
|---|---|---|---|---|---|---|
| **Acidic Materials** | | | | | | |
| Hystrene™ 5460 | | | | | | |
| Empol™ 1003 | | | | | | |
| Empol™ 1040 | | | | | | |
| Empol™ 1041 | | | | | | |
| Empol™ 1052 | | | | | | |
| Versadyme™ 204 | | | | | | |
| Hycar™ 2000X-162 CTB | 54.1 | | | | | |
| Ricon™ 156 C | | 54.1 | | | | |
| Ricon™ 157 C | | | 54.1 | | | |
| LIR™ 403 | | | | 54.1 | | |
| LIR™ 410 | | | | | 54.1 | |
| Nisso™ PB C-1000 | | | | | | 54.1 |
| Ricon™ 131/MA | | | | | | |
| Ricon™ 130/13MA | | | | | | |
| Ricon™ 181/10MA | | | | | | |
| **Basic Oxide** | | | | | | |
| Calcium Oxide | 26.4 | 26.4 | 26.4 | 26.4 | 26.4 | 26.4 |
| **Suspending Agents** | | | | | | |
| Cab-O-Sil™ M-5 | 2.0 | 2.0 | 2.0 | 2.0 | 2.0 | 2.0 |
| **Hydrophilic Additive** | | | | | | |
| Elvanol™ 71-30 | 17.5 | 17.5 | 17.5 | 17.5 | 17.5 | 17.5 |

7

| Example | 32 | 33 | 34 | 35 | 36 | 37 |
|---|---|---|---|---|---|---|
| **Material Characterization** | | | | | | |
| Specific Gravity (gm/cc) | 1.162 | 1.207 | 1.183 | 1.159 | 1.133 | |
| Full Cone Penetration (1/10 mm) | 354 | 178 | 278 | 238 | 253 | 6 |
| Aging in Water @ 60°C (Days to Failure) | 31+ | 31+ | 31+ | 31+ | 31+ | NT |
| Temperature Cycling (Cycles to Failure) | 81+ | 81+ | 81+ | 81+ | 81+ | NT |

+ denotes the test was terminated without failure.
NT denotes the material was not tested.

| Example | 38 | 39 | 40 |
|---|---|---|---|
| **Acidic Materials** | | | |
| Hystrene™ 5460 | | | |
| Empol™ 1003 | | | |
| Empol™ 1040 | | | |
| Empol™ 1041 | | | |
| Empol™ 1052 | | | |
| Versadyme™ 204 | | | |
| Hycar™ 2000X-162 CTB | | | |
| Ricon™156 C | | | |
| Ricon™ 157 C | | | |
| LIR™ 403 | | | |
| LIR™ 410 | | | |
| Nisso™ PB C-1000 | | | |
| Ricon™ 131/MA | 54.1 | | |
| Ricon™ 130/13MA | | 54.1 | |
| Ricon™ 181/10MA | | | 54.1 |
| **Basic Oxide** | | | |
| Calcium Oxide | 26.4 | 26.4 | 26.4 |
| **Suspending Agents** | | | |
| Cab-O-Sil™ M-5 | 2.0 | 2.0 | 2.0 |
| **Hydrophilic Additive** | | | |
| Elvanol™71-30 | 17.5 | 17.5 | 17.5 |

| Example | 38 | 39 | 40 |
|---|---|---|---|

**Material Characterization**

| Specific Gravity (gm/cc) | 1.181 | 1.141 | 1.138 |
|---|---|---|---|
| Full Cone Penetration (1/10 mm) | 305 | 435 | 311 |
| Aging in Water @ 60°C (Days to Failure) | 31+ | 31+ | 31+ |
| Temperature Cycling (Cycles to Failure) | 75+ | 75+ | 75+ |

+ denotes the test was terminated without failure.
NT denotes the material was not tested.

| Example | 41 | 42 | 43 | 44 | 45 | 46 |
|---|---|---|---|---|---|---|
| Basic Oxide | | | | | | |
| Zinc Oxide | 26.4 | 26.4 | 26.4 | 26.4 | 26.4 | |
| Magnesium Oxide | | | | | | 26.4 |
| Barium Oxide | | | | | | |
| Copper (I) Oxide | | | | | | |
| Acidic Material | | | | | | |
| Versadyme™ 288 | 54.1 | 51.1 | | | | 54.1 |
| Hycar™ 2000X-162 CTB | | | 54.1 | 51.1 | | |
| Ricon™ 131/MA | | | | | 54.1 | |
| Suspending Agents | | | | | | |
| Cab-O-Sil™ M-5 | 2.0 | | 2.0 | | 2.0 | 2.0 |
| Alumagel™ | | 5.0 | | 5.0 | | |
| Hydrophilic Additive | | | | | | |
| Elvanol™ 71-30 | 17.5 | 17.5 | 17.5 | 17.5 | 17.5 | 17.5 |
| Material Characterization | | | | | | |
| Specific Gravity (gm/cc) | 1.270 | 1.156 | 1.285 | 1.183 | 1.246 | 1.216 |
| Full Cone Penetration (1/10 mm) | 267 | 352 | 87 | 110 | 302 | 358 |
| Aging in Water @ 60°C (Days to Failure) | 31 | 31+ | 31+ | 3 | 57+ | 57+ |
| Temperature Cycling (Cycles to Failure) | 75+ | 75+ | 75+ | 75+ | 75+ | 12 |
| + denotes the test was terminated without failure. NT denotes the material was not tested. | | | | | | |

| Example | 47 | 48 | 49 | 50 | 51 | 52 |
|---|---|---|---|---|---|---|
| Basic Oxide | | | | | | |
| Zinc Oxide<br>Magnesium Oxide<br>Barium Oxide<br>Copper (I) Oxide | 26.4 | 26.4 | 26.4 | 26.4 | 26.4 | 26.4 |
| Acidic Material | | | | | | |
| Versadyme™ 288<br>Hycar™ 2000X-162 CTB<br>Ricon™ 131/MA | 51.1 | 54.1 | 51.1 | 54.1 | 54.1 | 51.1 |
| Suspending Agents | | | | | | |
| Cab-O-Sil™ M-5<br>Alumagel™ | 5.0 | 2.0 | 5.0 | 2.0 | 2.0 | 5.0 |
| Hydrophilic Additive | | | | | | |
| Elvanol™ 71-30 | 17.5 | 17.5 | 17.5 | 17.5 | 17.5 | 17.5 |
| Material Characterization | | | | | | |
| Specific Gravity (gm/cc)<br>Full Cone Penetration (1/10 mm)<br>Aging in Water @ 60°C (Days to Failure)<br>Temperature Cycling (Cycles to Failure) | 1.141<br>445<br>31 +<br>48 | NT<br>4<br>NT<br>NT | NT<br>12<br>NT<br>NT | 1.318<br>323<br>57 +<br>75 + | 1.232<br>388<br>31 +<br>75 + | 1.198<br>208<br>13<br>75 + |
| + denotes the test was terminated without failure.<br>NT denotes the material was not tested. | | | | | | |

10

| Example | 53 | 54 | 55 | 56 | 57 | 58 |
|---|---|---|---|---|---|---|
| **Basic Oxide** | | | | | | |
| Zinc Oxide<br>Magnesium Oxide<br>Barium Oxide<br>Copper (I) Oxide | 26.4 | 26.4 | 26.4 | 26.4 | 26.4 | 26.4 |
| **Acidic Material** | | | | | | |
| Versadyme™ 288<br>Hycar™ 2000X-162 CTB<br>Ricon™ 131/MA | 54.1 | 51.1 | 54.1 | 54.1 | 51.1 | 54.1 |
| **Suspending Agents** | | | | | | |
| Cab-O-Sil™ M-5<br>Alumagel" | 2.0 | 5.0 | 2.0 | 2.0 | 5.0 | 2.0 |
| **Hydrophilic Additive** | | | | | | |
| Elvanol™ 71-30 | 17.5 | 17.5 | 17.5 | 17.5 | 17.5 | 17.5 |
| **Material Characterization** | | | | | | |
| Specific Gravity (gm/cc)<br>Full Cone Penetration (1/10 mm)<br>Aging in Water @ 60°C (Days to Failure)<br>Temperature Cycling (Cycles to Failure) | 1.204<br>295<br>31 +<br>75 + | 1.159<br>265<br>6<br>75 | 1.183<br>365<br>31 +<br>75 + | 1.290<br>362<br>31 +<br>75 + | 1.222<br>381<br>13<br>75 + | 1.149<br>110<br>57 +<br>75 + |
| + denotes the test was terminated without failure.<br>NT denotes the material was not tested. | | | | | | |

| Example | 59 | 60 |
|---|---|---|
| Basic Oxide | | |
| Zinc Oxide<br>Magnesium Oxide<br>Barium Oxide<br>Copper (I) Oxide | <br><br><br>26.4 | <br><br><br>26.4 |
| Acidic Material | | |
| Versadyme™ 288<br>Hycar™ 2000X-162 CTB<br>Ricon™ 131/MA | <br>51.1<br> | <br><br>54.1 |
| Suspending Agents | | |
| Cab-O-Sil™ M-5<br>Alumagel™ | 2.0<br> | <br>5.0 |
| Hydrophilic Additive | | |
| Elvanol™ 71-30 | 17.5 | 17.5 |
| Material Characterization | | |
| Specific Gravity (gm/cc)<br>Full Cone Penetration (1/10 mm)<br>Aging in Water @ 60°C (Days to Failure)<br>Temperature Cycling (Cycles to Failure) | 1.262<br>140<br>3<br>27 | 1.16<br>313<br>31 +<br>75 + |
| + denotes the test was terminated without failure.<br>NT denotes the material was not tested. | | |

| Example | 61 | 62 | 63 | 64 | 65 | 66 |
|---|---|---|---|---|---|---|
| Hydrophilic Additive | | | | | | |
| Elvanol™ 71-30<br>Vinol™ 540S<br>PVP™ K-90<br>Waterlock™ A-200<br>Waterlock™ G-400<br>Aridall™ 1125 | 17.5 | 17.5 | 17.5 | 17.5 | 17.5 | 17.5 |
| Basic Oxide | | | | | | |
| Calcium Oxide | 26.4 | 26.4 | 26.4 | 26.4 | 26.4 | 26.4 |
| Acidic Material | | | | | | |
| Versadyme™ 288<br>Hycar™ 2000X-162 CTB<br>Ricon™ 131/MA | 54.1 | 54.1 | 54.1 | 54.1 | 54.1 | 54.1 |
| Suspending Agents | | | | | | |
| Cab-O-Sil™ M-5 | 2.0 | 2.0 | 2.0 | 2.0 | 2.0 | 2.0 |
| Material Characterization | | | | | | |
| Specific Gravity (gm/cc)<br>Full Cone Penetration (1/10 mm)<br>Aging in Water @ 60°C (Days to Failure)<br>Temperature Cycling (Cycles to Failure) | 1.168<br>291<br>57+<br>75+ | 1.138<br>208<br>31+<br>75+ | 1.129<br>377<br>57+<br>75+ | 1.186<br>363<br>57+<br>75+ | 1.123<br>390<br>57+<br>75+ | 1.138<br>456<br>57+<br>75+ |
| + denotes the test was terminated without failure.<br>NT denotes the material was not tested. | | | | | | |

| Example | 67 | 68 | 69 | 70 | 71 | 72 |
|---|---|---|---|---|---|---|
| Hydrophilic Additive | | | | | | |
| Elvanol™ 71-30<br>Vinol™ 540S<br>PVP™ K-90<br>Waterlock™ A-200<br>Waterlock™ G-400<br>Aridall™ 1125 | 17.5 | 17.5 | 17.5 | 17.5 | 17.5 | 17.5 |
| Basic Oxide | | | | | | |
| Calcium Oxide | 26.4 | 26.4 | 26.4 | 26.4 | 26.4 | 26.4 |
| Acidic Material | | | | | | |
| Versadyme™ 288<br>Hycar™ 2000X-162 CTB<br>Ricon™ 131/MA | 54.1 | 54.1 | 54.1 | 54.1 | 54.1 | 54.1 |
| Suspending Agents | | | | | | |
| Cab-O-Sil™ M-5 | 2.0 | 2.0 | 2.0 | 2.0 | 2.0 | 2.0 |
| Material Characterization | | | | | | |
| Specific Gravity (gm/cc)<br>Full Cone Penetration (1/10 mm)<br>Aging in Water @ 60°C (Days to Failure)<br>Temperature Cycling (Cycles to Failure) | 1.189<br>291<br>57 +<br>75 + | 1.126<br>350<br>57 +<br>75 + | 1.153<br>380<br>57 +<br>75 + | 1.147<br>342<br>57 +<br>12 | 1.120<br>340<br>57 +<br>75 + | 1.150<br>433<br>6<br>48 |
| + denotes the test was terminated without failure.<br>NT denotes the material was not tested. | | | | | | |

| Example | 73 | 74 |
|---|---|---|
| **Hydrophilic Additive** | | |
| Elvanol™ 71-30 | | |
| Vinol™ 540S | | |
| PVP™ K-90 | | |
| Waterlock™ A-200 | | |
| Waterlock™ G-400 | 17.5 | |
| Aridall™ 1125 | | 4.0 |
| **Basic Oxide** | | |
| Calcium Oxide | 26.4 | 30.4 |
| **Acidic Material** | | |
| Versadyme™ 288 | 54.1 | 62.6 |
| Hycar™ 2000X-162 CTB | | |
| Ricon™ 131/MA | | |
| **Suspending Agents** | | |
| Cab-O-Sil™ M-5 | 2.0 | 2.0 |
| **Material Characterization** | | |
| Specific Gravity (gm/cc) | 1.201 | 1.174 |
| Full Cone Penetration (1/10 mm) | 463 | 342 |
| Aging in Water @ 60 °C (Days to Failure) | 2 | 13 |
| Temperature Cycling (Cycles to Failure) | 12 | 75 + |
| + denotes the test was terminated without failure. NT denotes the material was not tested. | | |

The invention is further illustrated in the following comparative examples. The materials, amounts and conditions employed in these examples are illustrative only.

Example 75

One of the compositions of the present invention, Example 25 (denoted as FE25) was compared to a calcium soap-based grease (the "standard grease") in 3M's five pair and twenty five pair 3800 "super can" Buried Service Wire, (BSW). For example, into each of the four 3M 3800B 25 pair BSW "super can" bodies was loaded about 750 grams of FE25. Two general, twenty five pair 24 gauge cables were spliced together with dry Picabond™ connectors via standard splicing procedures. Each of these splices were then positioned into a 3M 3800B BSW "super can" splice tray and correspondingly each tray was then pressed into one of the 3800B BSW kit bodies containing FE25 sealant. Similarly, the balance of the samples were prepared. The Tip to Ring insulation resistance of all splice assemblies were then measured (500 VDC using a General Radio model 1864 megohmeter).

Freeze/Thaw in Water

Description:

The Freeze/Thaw samples were soaked under 30.5 cm of water contained in a 19 liter pail. Each sample was placed vertically in the water with its cable ends strapped to the outside of the container. The container was placed within a Thermotron™ wp762 environmental chamber and cycled for 50 cycles between -40 °C and 60 °C. The total time for each cycle was 12 hours. Each cycle consisted of 5 hour dwells at each temperature extreme and one hour transition time between the temperature extremes.

Criteria for Failure:

The samples should maintain insulation resistance of greater than 100 mega ohms (1.0 E8 ohms) when subjected to test requirements described above.

Results:

Table 1 provides the sample installation temperature, initial and final insulation resistance, and the final physical condition. Note that the insulation resistance was measured in ohms and stated in scientific notation.

Table 1

| Sample # | Sealant/Pair Count | Instal. Temp. (°C) | Initial I.R. (Ohms) | Final Closure I.R. (Ohms) | Condition |
|---|---|---|---|---|---|
| 1 | FE25/25 Pr | -10 | 8.2 E11 | 4.0 E11 | No damage |
| 2 | FE25/25 Pr | 23 | 1.6 E11 | 2.4 E11 | No damage |
| 3 | FE25/25 Pr | 40 | 3.5 E11 | 2.2 E11 | No damage |
| 4 | FE25/25 Pr | 23 | 7.4 E10 | 1.0 E11 | No damage |
| 5 | FE25/ 5 Pr | -10 | 15.0 E12 | 2.4 E12 | No damage |
| 6 | FE25/ 5 Pr | 23 | 26.0 E12 | 3.5 E12 | No damage |
| 7 | FE25/ 5 Pr | 40 | 16.0 E12 | 2.6 E12 | No damage |
| 8 | FE25/ 5 Pr | 23 | 14.0 E12 | 2.8 E12 | No damage |
| 9 | Grease/25 Pr | -10 | 2.3 E12 | Failure | Water w/in |
| 10 | Grease/25 Pr | 23 | 4.5 E12 | Failure | Water w/in |
| 11 | Grease/25 Pr | 40 | 4.0 E12 | Failure | Water w/in |
| 12 | Grease/25 Pr | 23 | 5.9 E12 | Failure | Water w/in |
| 13 | Grease/ 5 Pr | -10 | 40.0 E12 | Failure | Water w/in |
| 14 | Grease/ 5 Pr | 23 | 90.0 E12 | Failure | Water w/in |
| 15 | Grease/ 5 Pr | 40 | 90.0 E12 | Failure | Water w/in |
| 16 | Grease/ 5 Pr | 23 | 90.0 E12 | Failure | Water w/in |

Conclusion:

This example demonstrates that the 3800B and the 3800 sealed with FE25 provided excellent protection while submerged under freezing and thawing water. None of the samples showed any signs of physical damage and all four samples were completely reenterable. All of the samples sealed with a typical grease failed to maintain insulation resistance above the required 1.0 E8 ohms. These samples all contained water within the splice bundle.

Example 76

Dielectric Breakdown Test

Seven samples of the standard UR connector (filled with hydrocarbon based grease) and seven UR's (filled with FE25) were placed in a 5% salt solution according to Rural Electric Authority, REA, standard PE-52 Section 9.63 (wet). Each of the 14 samples was surged with an increasing amount of voltage until failure in the insulation occurred. (The breakdown occurs between the copper conductors and the salt water.) Table 2 illustrates the voltage breakdown values.

Table 2

| Sample | Insulating Filler | Breakdown (KV.) |
|--------|-------------------|-----------------|
| 1 | Grease | 11.7 |
| 2 | Grease | 11.8 |
| 3 | Grease | 15.4 |
| 4 | Grease | 12.3 |
| 5 | Grease | 12.4 |
| 6 | Grease | 15.4 |
| 7 | Grease | 14.4 |
| 8 | FE 25 | 17.1 |
| 9 | FE 25 | >25.0* |
| 10 | FE 25 | 23.5 |
| 11 | FE 25 | 20.2 |
| 12 | FE 25 | >25.0* |
| 13 | FE 25 | >25.0* |
| 14 | FE 25 | 18.6 |

\* Maximum effective reading of meter was 25.0 KV. This sample exceeded that reading.

This example demonstrates that the FE25 sealant exhibits dielectric breakdown levels surprisingly greater than the standard grease used in copper joining connectors. There are three possible locations for the breakdown to occur: between the salt water and, a) the polycarbonate to the element, b) the filler material to the conductors, c) the insulation outside of the connector. The majority of the failures took place within the wire channel.

**Claims**

1. A moisture-reactive composition free of hydrocarbon insulating oil and consisting essentially of at least one liquid polycarboxylic acid or anhydride; at least one inorganic basic oxide selected from zinc oxide, calcium oxide, barium oxide, strontium oxide, copper (I) oxide, and magnesium oxide; at least one hydrophilic material selected from a hydrophilic clay, polyvinyl pyrrolidone, polyvinyl alcohol, the potassium salt of polyacrylic acid, and the sodium salts of high molecular weight organic acids; at least one suspending agent, selected from amorphous fumed silica, aluminium octoate, diatomateous earth, metal soaps, the magnesium salts of stearic acid, the aluminium salts of stearic acid, powdered polyvinyl chloride, and glass walled hollow microspheres; and optional conventional additives.

2. The composition of claim 1 wherein said polycarboxylic acid or anhydride is present at a concentration of from 35 to 70 parts by weight; said oxide is present at from 15 to 50 parts by weight; said hydrophilic material is present at from 1 to 25 parts by weight; and said suspending agent is present at from 0.1 to 10 parts by weight, all based on the total weight of said composition.

3. The composition of claim 2 wherein said acid or anhydride is present at from 45 to 60 parts by weight; said oxide is present at from 25 to 35 parts by weight; said hydrophilic material is present at from 8 to 20 parts by weight, and said suspending agent is present at from 1 to 4 parts, all based on the total weight of said composition.

4. The composition of any preceding claim wherein said acid or anhydride is a dimer acid having a mono-acid content of less than 2 percent by weight.

5. The composition of any preceding claim wherein said hydrophilic material is polyvinyl alcohol.

6. The composition of claim 5 wherein said polyvinyl alcohol is from 99 to 99.8 percent hydrolysed.

7. The composition of any preceding claim wherein said suspending agent is amorphous fumed silica.

8. The composition of any one of preceding claims 1-3 and 5-8 wherein said acid or anhydride is selected from dimer and trimer acids, and carboxyl-functional polybutadiene or the anhydride equivalent thereof.

9. The composition of any preceding claim wherein said oxide is calcium oxide.

10. A moisture resistant splice assembly comprising at least two conductors spliced to each other and the moisture reactive composition of any preceding claim surrounding and in intimate contact with said conductors.

11. The splice assembly of claim 10 wherein said acid or anhydride is a dimer acid having a mono-acid content of less than about 2 percent by weight; said oxide is calcium oxide; said hydrophilic material is polyvinyl alcohol, and said suspending agent is amorphous fumed silica.

**Patentansprüche**

1. Mit Feuchtigkeit reaktionsfähige Zusammensetzung, frei von Kohlenwasserstoff-Isolieröl und im wesentlichen bestehend aus mindestens einer flüssigen Polycarbonsäure oder Anhydrid; mindestens einem anorganischen basischen Oxid, ausgewählt aus Zinkoxid, Calciumoxid, Bariumoxid, Strontiumoxid, Kupfer(I)-oxid und Magnesiumoxid; mindestens einem hydrophilen Material, ausgewählt aus einem hydrophilen Ton, Polyvinylpyrrolidon, Polyvinylalkohol, dem Kaliumsalz der Polyacrylsäure und den Natriumsalzen höhermolekularer organischer Salze, mindestens einem Suspendiermittel, ausgewählt aus amorphem Silica-Feinpulver, Aluminiumoctoat, Kieselgur, Metallseifen, den Magnesiumsalzen der Stearinsäure, den Aluminiumsalzen der Stearinsäure, pulverförmigem Polyvinylchlorid und hohlen Mikrokügelchen mit Glaswandung, sowie wahlweise konventionelle Additive.

2. Zusammensetzung nach Anspruch 1, bei welcher jeweils bezogen auf das Gesamtgewicht der Zusammensetzung vorliegen: die Polycarbonsäure oder das Anhydrid in einer Konzentration von 35...70 Gewichtsteilen, das Oxid mit 15...50 Gewichtsteilen, das hydrophile Material mit 1...25 Gewichtsteilen und das Suspendiermittel mit 0,1...10 Gewichtsteilen.

3. Zusammensetzung nach Anspruch 2, bei welcher jeweils bezogen auf das Gesamtgewicht der Zusammensetzung vorliegen: die Säure oder das Anhydrid, mit 45...60 Gewichtsteilen, das Oxid mit 25 ... 35 Gewichtsteilen, das hydrophile Material mit 8...20 Gewichtsteilen und das Suspendiermittel mit 1...4 Gewichtsteilen.

4. Zusammensetzung nach einem der vorgenannten Ansprüche, bei welcher die Säure oder das Anhydrid eine Dimersäure mit einem Gehalt an Monosäure von weniger als 2 Gewichtsprozent ist.

5. Zusammensetzung nach einem der vorgenannten Ansprüche, bei welcher das hydrophile Material Polyvinylalkohol ist.

6. Zusammensetzung nach Anspruch 5, bei welcher der Polyvinylalkohol zu 99 ... 99,8 Prozent hydrolysiert ist.

7. Zusammensetzung nach einem der vorgenannten Ansprüche, bei welcher das Suspendiermittel amorphes Silica-Feinpulver ist.

8. Zusammensetzung nach einem der Ansprüche 1 bis 3 und 5 bis 8, bei welcher die Säure oder das Anhydrid ausgewählt wird aus Dimersäuren und Trimersäuren sowie carboxyfunktionellem Polybutadien oder dem Anhydrid-Äquivalent davon.

9. Zusammensetzung nach einem der vorgenannten Ansprüche, bei welcher das Oxid Calciumoxid ist.

10. Feuchtigkeitsundurchlässige Spleißanordnung, umfassend mindestens zwei miteinander verspleißte Leiter und die mit Feuchtigkeit reaktionsfähige, diese Leiter umgebende und in einem innigen Kontakt mit ihnen befindliche Zusammensetzung nach einem der vorgenannten Ansprüche.

**11.** Spleißanordnung nach Anspruch 10, bei welcher die Säure oder das Anhydrid eine Dimersäure mit einem Gehalt an Monosäure von weniger als 2 Gewichtsprozent ist, das Oxid Calciumoxid ist, das hydrophile Material Polyvinylalkohol ist und das Suspendiermittel amorphes Silica-Feinpulver ist.

**Revendications**

**1.** Composition réactive à l'eau dépourvue d'huile isolante hydrocarbonée et constituée essentiellement d'au moins un acide ou anhydride polycarboxylique liquide; au moins un oxyde basique inorganique choisi parmi l'oxyde de zinc, l'oxyde de calcium, l'oxyde de baryum, l'oxyde de strontium, l'oxyde de cuivre (I) et l'oxyde de magnésium; au moins une matière hydrophile choisie parmi une argile hydrophile, la polyvinylpyrrolidone, l'alcool polyvinylique, le sel de potassium de l'acide polyacrylique, et les sels de sodium d'acides organiques à haut poids moléculaire; au moins un agent de suspension, choisi parmi la silice fumée amorphe, l'octoate d'aluminium, la terre de diatomées, les savons métalliques, les sels de magnésium de l'acide stéarique, les sels d'aluminium de l'acide stéarique, le chlorure de polyvinyle pulvérulent, et les microsphères creuses à paroi de verre; et des additifs classiques facultatifs.

**2.** Composition de la revendication 1 dans laquelle ledit acide ou anhydride polycarboxylique est présent à une concentration de 35 à 70 parties en poids; ledit oxyde est présent entre 15 et 50 parties en poids; ladite matière hydrophile est présente entre 1 et 25 parties en poids; et ledit agent de suspension est présent entre 0,1 et 10 parties en poids, le tout sur la base du poids total de ladite composition.

**3.** Composition de la revendication 2 dans laquelle ledit acide ou anhydride est présent entre 45 et 60 parties en poids; ledit oxyde est présent entre 25 et 35 parties en poids; ladite matière hydrophile est présente entre 8 et 20 parties en poids, et ledit agent de suspension est présent entre 1 et 4 parties, le tout sur la base du poids total de ladite composition.

**4.** Composition de l'une quelconque des revendications précédentes dans laquelle ledit acide ou anhydride est un acide dimère ayant une teneur en mono-acide inférieure à 2% en poids.

**5.** Composition de l'une quelconque des revendications précédentes dans laquelle ladite matière hydrophile est l'alcool polyvinylique.

**6.** Composition de la revendication 5 dans laquelle ledit alcool polyvinylique est hydrolysé à 99 à 99,8%.

**7.** Composition de l'une quelconque des revendications précédentes dans laquelle ledit agent de suspension est la silice fumée amorphe.

**8.** Composition de l'une quelconque des revendications 1-3 et 5-8 précédentes dans laquelle ledit acide ou anhydride est choisi parmi les acides dimères et trimères et le polybutadiène à fonction carboxyle ou son équivalent anhydride.

**9.** Composition de l'une quelconque des revendications précédentes dans laquelle ledit oxyde est l'oxyde de calcium.

**10.** Assemblage d'épissure résistant à l'humidité comprenant au moins deux conducteurs épissés l'un à l'autre et la composition réactive à l'eau de l'une quelconque des revendications précédentes entourant et en contact intime avec lesdits conducteurs.

**11.** Assemblage d'épissure de la revendication 10 dans lequel ledit acide ou anhydride est un acide dimère ayant une teneur en monoacide inférieure à environ 2% en poids; ledit oxyde est l'oxyde de calcium; ladite matière hydrophile est l'alcool polyvinylique, et ledit agent de suspension est la silice fumée amorphe.